# NEUE EUROPÄISCHE PATENTSCHRIFT

(11) **EP 3 205 204 B2**
(45) Veröffentlichungstag und Bekanntmachung des Hinweises auf die Entscheidung über den Einspruch: **17.04.2024**
(45) Hinweis auf die Patenterteilung: 02.09.2020
(21) Anmeldenummer: 17155164.1
(22) Anmeldetag: 08.02.2017
(51) Int. Cl.: A01F 15/08

(54) **BALLENPRESSE**
BALING PRESS
PRESSE À BALLES

(30) Priorität: 11.02.2016 DE 102016001588
(43) Veröffentlichungstag der Anmeldung: 16.08.2017
(73) Patentinhaber: PÖTTINGER Landtechnik GmbH, 4710 Grieskirchen (AT)
(72) Erfinder: Lackner, Christian, 4060 Leonding (AT)
(74) Vertreter: Thoma, Michael

(56) Entgegenhaltungen:
- EP-A1- 1 588 604
- EP-A1- 1 842 418
- EP-A2- 1 444 882
- WO-A1-2015/160242
- DE-T2-602004 009 666
- DE-T2-602004 010 121
- US-A- 4 258 619
- US-A1- 2015 257 340
- US-B1- 7 640 852

## Beschreibung

Die vorliegende Erfindung betrifft eine Ballenpresse mit einer teil- oder vollvariablen Ballenformkammer, in der halm- und/oder blattartiges Erntegut oder ähnliches Pressgut zu Ballen form- und/oder pressbar ist, wobei die Ballenformkammer zumindest ein um Umlenkrollen umlaufendes Riemenelement aufweist, dem zumindest ein verstellbarer Riemenspanner zugeordnet ist, wobei die Ballenformkammer eine auffahrbare Entladetür aufweist, und wobei eine Entladesteuervorrichtung zum Steuern der Entladetür und/oder der Umlenkrollen und/oder des Riemenspanners beim Entladen eines Ballens vorgesehen ist.

Ballenpressen sind im landwirtschaftlichen Bereich in verschiedenen Bauformen bekannt, insbesondere in Form von Rundballenpressen mit variabler oder fester Ballenkammer, bei den in der Ballenkammer eine Mehrzahl von Umlenkwalzen oder -rollen zugeordnet sind. Bei variablen Ballenkammern werden hierbei oft Endlosriemen, Riemen mit Riemenverbindern oder Stabkettenelevatoren eingesetzt, die mit zunehmender Ernteguteinspeisung in den Ballenraum einen zunehmend größeren Ballenraumdurchmesser bzw. -umfang abbilden. Bei derartigen Ballenpressen werden die Umlenkwalzen bzw. -rollen zur Umlenkung der Riemen bzw. Stabketten, aber auch unmittelbar zur Erntegutumlenkung eingesetzt, und können im Ballenraum selbst, aber auch außerhalb angeordnet sein. Andererseits werden bei festen Ballenkammern die Umlenkrollen auch ohne derartige Riemen oder Stabketten entlang des Umfangs der Ballenkammer verteilt angeordnet, um unmittelbar mit den Umlenkwalzen das eingespeiste Erntegut zu Ballen zu pressen. Solche Umlenkwalzen bzw. -rollen ohne Umlenkfunktion für einen Riemen oder eine Stabkette können auch bei variablen Ballenkammern zusätzlich zu den den Riemen oder die Stabkette umlenkenden Umlenkrollen bzw. -walzen vorgesehen sein.

Bei variablen Ballenpressen mit umlaufenden Riemenelementen kommt es je nach Riemenlaufgeometrie zu dem Phänomen, dass ein aus der Ballenkammer zu entladender Ballen beim Ausstoß mehr oder weniger leicht aus der Ballenkammer fällt bzw. entladen werden kann. Insbesondere kann es durch den Riemenlauf dazu kommen, dass trotz bereits aufgefahrener Entladetür und geöffneter Ballenformkammer der Ballen vom Riemen noch relativ lange in der Ballenformkammer gehalten wird.

Um einem ungewollten Verbleiben des Ballens in der Ballenkammer bzw. einer ungewollten Verzögerung des Entladevorgangs entgegenzuwirken, wurde bereits vorgeschlagen, die umlaufenden Riemenelemente mehr oder minder vollkommen zu entspannen, beispielsweise indem der Riemenspanner zurückgefahren wird. Ein solches Entspannen der Riemenelemente ist jedoch nicht ganz unproblematisch, da es hierbei zu einem zumindest kurzzeitig hohen Schlupf zwischen Riemen und Riemenantriebswalze bis hin zu einem vollkommenen Stillstand der Umlaufbewegung des Riemens kommen kann, was dann den weiteren Entladevorgang und vor allem auch das Wiederspannen des Riemens beeinträchtigen kann.

Andererseits wurde auch bereits vorgeschlagen, bei geöffneter Entladetür eine oder mehrere der Umlenkwalzen bzw. -rollen, um die keine Riemen geführt sind, zu verfahren, um hierdurch den Ballen aus der Ballenformkammer zu verbringen. Insbesondere wurde bereits angedacht, die Starterwalzen, die eingangs der Ballenformkammer im Anschluss an den Förderkanal der Erntegut-Aufnahmevorrichtung angeordnet sind, um das ankommende Erntegut in Umfangsrichtung der Ballenformkammer zu fördern und den Ballenformprozess zu starten, beim Entladevorgang auf die aufgeschwenkte Heckklappe zu zu verfahren, um hierdurch den Ballen aus der geöffneten Ballenformkammer zu drücken. Solchermaßen verfahrbare Starterwalzen bedingen jedoch einen großen konstruktiven Aufwand, da eine speziell verfahrbare Aufhängung geschaffen werden muss, die zudem auch noch mit dem Antrieb der Starterwalzen kompatibel sein muss.

Ballenpressen der eingangs genannten Art sind beispielsweise aus den Schriften US 4 258 619 A, EP 1 842 418 A1, DE 10 2011 010 251 A1 oder DE 20 2012 006 898 U1 bekannt. Ferner schlägt die Schrift DE 10 2006 038 299 A1 vor, den Entladeprozess einer Rundballenpresse dadurch zu vereinfachen und zu unterstützen, dass ausgangsseitig an die Ballenformkammer anschließend ein abschüssiges Förderband vorgesehen wird. Aus der Schrift DE 103 03 201 C5 ist es weiterhin bekannt, die Entladetür einer Rundballenpresse in Form einer nach oben aufschwenkbaren Heckklappe mit einem speziellen Geschwindigkeitsprofil aufzuschwenken, um einerseits ein schnelles Aufreißen der Heckklappe zu ermöglichen, andererseits jedoch den Verschleiß durch Anfahren der Endstellungen mit reduzierter Geschwindigkeit zu vermindern.

Der vorliegenden Erfindung liegt die Aufgabe zugrunde, eine verbesserte Ballenpresse der genannten Art zu schaffen, die Nachteile des Standes der Technik vermeidet und Letzteren in vorteilhafter Weise weiterbildet. Insbesondere soll ein verlässlich kontrolliertes Entladen der Ballen auch unter erschwerten Geländebedingungen wie Hangfahrten ermöglicht werden, ohne hierfür aufwändige Walzenlageranordnungen und zusätzliche Beweglichkeiten der Umlenkrollen vorzusehen.

Erfindungsgemäß wird die genannte Aufgabe durch eine Ballenpresse gemäß Anspruch 1 gelöst. Bevorzugte Ausgestaltungen der Erfindung sind Gegenstand der abhängigen Ansprüche.

Es wird also vorgeschlagen, bereits vorhandene Beweglichkeiten der variablen Ballenformkammer für den Entladevorgang zu nutzen und den Ballen bei gespannt bleibendem Riemenelement aus der Ballenformkammer zu drücken, indem der zumindest eine Riemenspanner, der an sich zum Spannen des Riemenelements beweglich bzw. einstellbar ist, gegen den Ballen gedrückt und diese hierdurch aus der geöffneten Entladetür verbracht wird. Erfindungsgemäß ist die Entladesteuervorrichtung dazu ausgebildet, beim Entladen den Riemenspanner unter Öffnen der Entladetür gegen den Ballen zu drücken und den Ballen durch den Riemenspanner bei gespannt bleibendem Riemenelement aus der Ballenformkammer zu drücken. Durch das Gespanntbleiben des Riemenelements wird die vorgenannte Schlupfproblematik vermieden. Zudem wird der Ballen auch beim Entladen kontrolliert geführt. Andererseits wird durch das Verstellen des Riemenspanners vermieden, dass der Ballen vom gespannt bleibenden Riemenelement in der Ballenformkammer gehalten wird bzw. der Entladevorgang verzögert wird. Da der Riemenspanner an sich bereits beweglich gelagert ist, brauchen keine zusätzlichen Freiheitsgrade und aufwändige Lagerlösungen geschaffen werden.

Um den Ballen beim Entladen noch besser zu kontrollieren, kann in Weiterbildung der Erfindung vorgesehen sein, dass die Entladetür anders als im Stand der Technik nicht möglichst schnell aufgerissen wird, sondern derart gesteuert wird, dass der Ballen bei seiner Entladebewegung gegen die Entladetür drückt und/oder die Entladetür beim Entladen des Ballens in Kontakt mit dem Ballen bleibt.

Die Entladesteuervorrichtung sieht hierbei eine definierte Öffnungsbewegung der Entladetür vor, deren Bewegungsprofil auf die Stellbewegung des Riemenspanners abgestimmt ist und/oder an die tatsächliche Entladebewegung des Ballens angepasst wird. Hierbei wäre es grundsätzlich möglich, die Entladebewegung des Ballens sensorisch zu erfassen und in Abhängigkeit der erfassten Entladebewegung die Öffnungsbewegung der Entladetür zu steuern.

Alternativ oder zusätzlich kann die Öffnungsbewegung der Entladetür auch druckgesteuert sein, beispielsweise derart, dass beim Entladen des Ballens dieser mit einer definierten Kraft gegen die Entladetür drückt und/oder die Entladetür mit einer definierten Kraft der Entladebewegung des Ballens entgegenwirkt. Die genannte definierte Kraft kann hierbei konstant sein, alternativ jedoch auch in verschiedenen Phasen des Entladewegs des Ballens verschiedene Werte annehmen, beispielsweise dergestalt, dass in einem anfänglichen Stadium des Entladevorgangs, in der der Ballen noch recht umfänglich vom Riemenelement gehalten ist, eine kleinere Kraft, in einem mittleren Stadium des Entladevorgangs eine größere Kraft und sodann gegen Ende des Entladevorgangs wiederum eine kleinere Kraft oder auch gar keine Kraft mehr vorgesehen wird, mit der die Entladetür dem Ballen entgegenwirkt. Je nach Konfiguration der Riemenführung und/oder der Riemenspannerbewegung kann jedoch auch ein anderer Kraftverlauf vorgesehen sein.

Die Bewegung und/oder Hemmkraft der Entladetür auf den Ballen kann hierbei von der Entladesteuervorrichtung aktiv gesteuert und/oder vorgegeben werden. Alternativ kann die Entladetür von der Entladesteuervorrichtung auch passiv gefahren werden, insbesondere dergestalt, dass ein Stellaktor zum Auffahren und/oder Schließen der Entladetür beim Entladen des Ballens in eine Schwimmstellung gefahren wird, in der die Entladetür vom Ballen aufgedrückt werden kann. Je nach Bewegungsachse und Kinematik der Entladetür kann der genannte Stellaktor hierbei eine Hemmkraft, beispielsweise durch Drosselung eines hydraulischen Stellaktors, auf die Entladetür aufschalten, um deren Auffahrbewegung zu bremsen, oder auch eine gewisse Stellkraft in Auffahrrichtung auf die Entladetür aufbringen, um beispielsweise einen Teil einer entgegenwirkenden Gewichtskraft der Entladetür und/oder einen Teil der Reibungshemmung der Entladetür zu kompensieren, so dass eine vergleichsweise kleinere Hemmkraft der Entladetür auf den Ballen ausgeübt wird.

Wenn die Entladetür beim Entladen des Ballens mit dem Ballen in Berührung bleibt und/oder mit einer gewissen Kraft gegen den Ballen drückt und/oder der Ballen beim Entladen mit einer gewissen Kraft zwischen dem Riemenspanner und der Entladetür eingespannt bleibt, kann insbesondere bei schrägen Hangfahrten ein Querverrutschen des Ballens vermieden und die Entladebewegung des Ballens besser kontrolliert werden.

Der den Entladevorgang unterstützende Riemenspanner kann grundsätzlich verschieden ausgebildet und/oder beweglich gelagert und/oder angeordnet sein. Um den Entladevorgang wirkungsvoll unterstützen zu können, kann der genannte Riemenspanner vorteilhafterweise in einem Sektor der Ballenformkammer angeordnet sein, die der Entladeöffnung bei geöffneter Entladetür gegenüberliegt bzw. zumindest in einem der Entladeöffnung abgewandten Bereich der Ballenformkammer liegt. Vorteilhafterweise kann der Riemenspanner eine Bewegungsachse und/oder eine Bewegungsbahn besitzen, die ein Verfahren des Riemenspanners auf die Entladeöffnung bei geöffneter Entladetür zulässt. Die Bewegung des Riemenspanners kann hierbei in einer Richtung direkt auf die Entladeöffnung zu erfolgen. Alternativ kann es jedoch auch ausreichend sein, wenn die Riemenspannerbewegung schräg auf die Entladeöffnung zuführt und/oder eine Hauptkomponente auf die Entladeöffnung zu besitzt.

Unter der Annahme, dass der umlaufende Riemen zumindest anfangs des Entladeprozesses zumindest näherungsweise nach Art eines Rings bzw. Teilrings tangential um dem Ballen herum verläuft, kann es ausreichend sein, wenn der Riemenspanner eine Beweglichkeit quer zur Riemenumlaufbahn besitzt und nach innen auf den von der Umlaufbahn umschlossenen Bereich zu bzw. in das Innere der umschlossenen Umlaufbahn verfahrbar ist, so dass der Riemenspanner den vom Riemenelement umschlungenen Ballen aus der Riemenumschlingung herausdrücken bzw. von der Riemenumlaufbahn wegdrücken kann.

Dem genannten Riemenspanner kann ein Stellaktor zugeordnet sein, um dem Riemenspanner beim Entladen aktiv in die gewünschte Richtung zu verbringen, wobei der genannte Stellaktor von der Entladesteuervorrichtung ansteuerbar sein kann. Ein solcher Stellaktor kann grundsätzlich auch zum Spannen des Riemens während des Ballenformvorgangs verwendet werden, beispielsweise indem ein hydraulischer Vorspanndruck auf einen solchen Stellaktor geschaltet wird. Alternativ kann dem Riemenspanner jedoch auch eine separate Spanneinrichtung zugeordnet sein, die die Spannung des Riemenelements für den Ballenformvorgang bewirkt, wobei hier der genannte Stellaktor deaktiviert sein kann und/oder ggf. unterstützend zugeschaltet sein kann.

Die Erfindung wird nachfolgend anhand eines bevorzugten Ausführungsbeispiels und zugehöriger Zeichnungen näher erläutert. In den Zeichnungen zeigen:

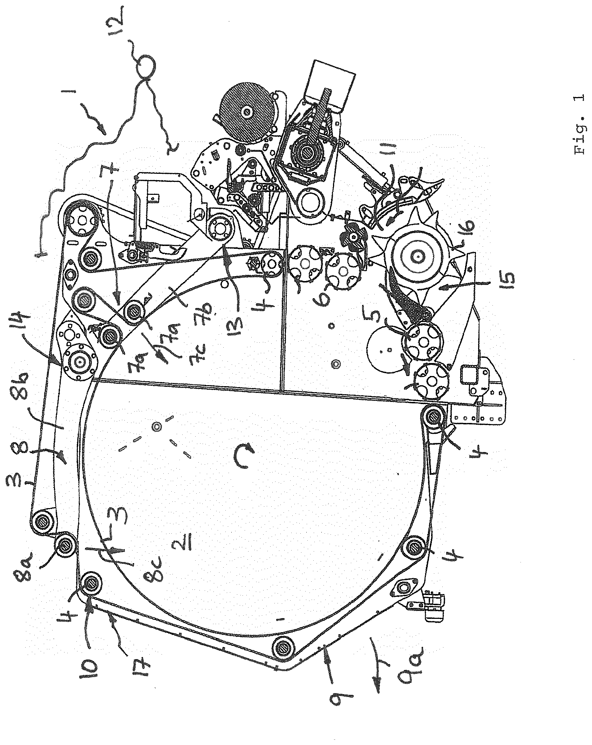

- Fig. 1:: eine schematische, teilweise geschnittene Seitenansicht einer Ballenpresse nach einer vorteilhaften Ausführung der Erfindung, wobei die variable Ballenformkammer der Ballenpresse in einer Konfiguration gezeigt ist, die einem fertig geformten Ballen entspricht, wobei in strichlierter Darstellung das Auffahren der Entladetür für das Entladen des geformten Ballens angedeutet ist.

Wie die Figur zeigt, kann die Ballenpresse 1 zum Formen und/oder Verpressen von Erntegut zu Ballen eine im Durchmesser variable Ballenformkammer 2 aufweisen, die im Wesentlichen zylindrisch konturiert sein kann. Die Ballenformkammer kann hierbei über einen Zuführkanal 11 mit Ernte- bzw. Pressgut beschickt werden, wobei der Zuführkanal 11 in an sich bekannter Weise mit einem Förderrotor 16 sowie ggf. einem Schneidwerk 15 versehen sein kann. Stromauf des Förderrotors 16 kann in an sich bekannter Weise eine Aufnahmevorrichtung, beispielsweise in Form einer Pickup mit einer rotierenden Stachelwalze, zum Aufnehmen des Ernteguts vom Boden vorgesehen sein.

Wie Fig. 1 zeigt, sind am Eingang der Ballenformkammer 2 bzw. im Übergangsbereich zwischen dem genannten Zuführkanal 11 und der Ballenformkammer 2 mehrere Form- und/oder Presswalzen und/oder Starterwalzen 5 bzw. 6 vorgesehen, die mit dem in die Ballenformkammer 2 einlaufenden Pressgut in Eingriff gelangen.

Ferner umfasst die Ballenformkammer 2 weitere Umlenkwalzen verteilt über den Umfang der Ballenformkammer 2, über welche Umlenkwalzen 4 mehrere parallel zueinander ausgerichtete Riemenelemente 3 umlaufen, deren Umlaufbahn sich an den entstehenden Ballen anschmiegt und mit diesem zusammen im Durchmesser größer wird.

Den um die Umlenkwalzen 4 umlaufenden Riemenelementen 3 ist zumindest ein Riemenspanner 7 zugeordnet, wobei, wie Fig. 1 zeigt, auch mehrere Riemenspanner 7 und 8 vorgesehen sein können, um die Riemenelemente 3 spannen und die Umlaufbahn bzw. dessen Durchmesser an den beim Ballenformvorgang nach und nach größer werdenden Ballen anpassen zu können.

Wie Fig. 1 zeigt, kann hierbei ein Riemenspanner 7 auf der Seite der Ballenformkammer 2 vorgesehen sein, auf der auch der Einlauf der Ballenformkammer 2 und/oder die vorgenannten Starterwalzen 5 und 6 angeordnet sind.

Ein weiterer Riemenspanner 8 kann auf einem dem Einlauf der Ballenformkammer 2 gegenüberliegenden Abschnitt der Ballenformkammer 2 angeordnet sein, beispielsweise an einer Oberseite und/oder einer Heckseite der Ballenformkammer 2.

Die Riemenspanner 7 und 8 können jeweils eine oder mehrere Umlenkwalzen 7a bzw. 8a aufweisen, die jeweils an einem Schwenkarm 7b bzw. 8b gelagert oder in anderer Weise verstellbar sein können, wobei die Beweglichkeit der Riemenspanner 7 und 8 vorteilhafterweise derart beschaffen ist, dass die Riemenspanner 7 bzw. 8 quer zur Umlaufbahn der Riemenelemente 3 nach innen in die Ballenformkammer 2 fahrbar sind. In Fig. 1 verdeutlichen die Pfeile 7c und 8c die Verstellrichtung und/oder Vorspannrichtung der Riemenspanner 7 bzw. 8.

Um einen in der Ballenformkammer 2 geformten Ballen entladen zu können, umfasst die Ballenformkammer 2 eine Entladetür 9, die vorteilhafterweise in einem dem Einlauf der Ballenformkammer 2 und/oder den Starterwalzen 5 und 6 abgewandten Sektor der Ballenformkammer 2 angeordnet sein kann. Ist der Einlauf der Ballenformkammer 2 bugseitig vorgesehen, kann die Entladetür 9 heckseitig angeordnet sein.

Die genannte Entladetür 9 kann hierbei grundsätzlich verschieden beweglich gelagert sein. Vorteilhafterweise kann die Entladetür 9 nach Art einer Klappe um eine liegende Türschwenkachse 10 aufschwenkbar sein, wobei die genannte Türschwenkachse 10 an einem oberen Abschnitt der Entladetür 9 vorgesehen sein kann, so dass die Entladetür 9 nach oben aufgeschwenkt werden kann. Beispielsweise kann die Türschwenkachse 10 im Bereich einer der Umlenkwalzen 4 vorgesehen sein. Der Pfeil 9a zeigt die mögliche Bewegungsrichtung bzw. Auffahrrichtung der Entladetür 9.

Beim Entladen eines Ballens werden die Entladetür 9 sowie die Riemenspanner 7 und 8 von einer Entladesteuervorrichtung 12 gesteuert, wobei die Entladesteuervorrichtung 12 Stellaktoren 13 und 14 zum Verstellen der Riemenspanner 7 und 8 und/oder einen Stellaktor 17 zum Verstellen der Entladetür 9 ansteuern kann, um deren Bewegungen zu steuern. Die genannten Stellaktoren 17 können Hydraulikaktoren beispielsweise in Form von Hydraulikzylindern, elektrische Drehmotoren, Spindelantriebe oder ähnliches sein, wobei die Entladesteuervorrichtung 12 als elektronische Steuerung beispielsweise umfassend einen Prozessor und einen Programmspeicher ausgebildet sein kann.

Beim Entladen eines Ballens kann unter Öffnen der Entladetür 9 der Riemenspanner 7 nach innen verfahren und gegen den Ballen gedrückt werden, um den Ballen auf die entstehende Entladeöffnung zu zu drücken. Wie Fig. 1 zeigt, geht die Verfahrbewegung des Riemenspanners 7 auf die entstehenden Entladeöffnung zu.

Bei der genannten Bewegung des Riemenspanners 7 beim Entladen eines Ballens bleiben die Riemenelemente 3 gespannt. Gegebenenfalls, soweit nötig, kann hierbei mit dem weiteren Riemenspanner 8 nachgesteuert werden, d.h. der Riemenspanner 8 kann ergänzend so bewegt werden, dass die gewünschte Riemenspannung erhalten bleibt.

Die Entladetür 9 wird hierbei vorteilhafterweise derart gesteuert, dass die Entladetür 9 mit dem sich zur Entladeöffnung bewegenden Ballen in Berührung bleibt, insbesondere der genannte Ballen die Entladetür unter leichtem Widerstand immer weiter aufdrückt, bis der Ballen schließlich aus der Entladeöffnung fallen kann.

## Patentansprüche

1. Ballenpresse mit einer teil- oder vollvariablen Ballenkammer (2), in der halm-und/oder blattartiges Erntegut oder ähnliches Pressgut zu Ballen form- und/oder pressbar ist, wobei die Ballenformkammer (2) zumindest ein um Umlenkrollen (4) umlaufendes Riemenelement (3) aufweist, dem zumindest ein verstellbarer Riemenspanner (7, 8) zugeordnet ist, wobei die Ballenformkammer (2) eine auffahrbare Entladetür (9) aufweist, und wobei eine Entladesteuervorrichtung (12) zum Steuern der Entladetür (9) und/oder der Umlenkrollen (4) und/oder des Riemenspanners (7, 8) beim Entladen eines Ballens vorgesehen ist, **dadurch gekennzeichnet, dass die** Entladesteuervorrichtung (12) dazu ausgebildet ist, beim Entladen den Riemenspanner (7) unter Öffnen der Entladetür (9) gegen den Ballen zu drücken und eine Auffahrbewegung der Entladetür (9) vorzusehen, deren Bewegungsprofil und/oder Geschwindigkeitsprofil an die Stellbewegung des Riemenspanners (7) angepasst ist sowie den Ballen durch den Riemenspanner (7) bei gespannt bleibendem Riemenelement (3) aus der Ballenformkammer (2) zu drücken.

2. Ballenpresse nach dem vorhergehenden Anspruch, wobei die Entladesteuervorrichtung (12) dazu ausgebildet ist, beim Entladen eines Ballens die Entladetür (9) in Kontakt mit dem Ballen zu halten und/oder gegen den Ballen zu drücken.

3. Ballenpresse nach dem vorhergehenden Anspruch, wobei die Entladesteuervorrichtung (12) derart ausgebildet ist, dass die Entladetür (9) beim Entladen eines Ballens durch den Ballen aufgedrückt wird und die Entladetür (9) mit einer dem Aufdrücken entgegenwirkenden Kraft gegen den Ballen wirkt.

4. Ballenpresse nach dem vorhergehenden Anspruch, wobei die Entladesteuervorrichtung (12) einen der Entladetür (9) zugeordneten Stellaktor (17) beim Entladen in Schwimmstellung schaltet und/oder mit einer vorbestimmten Bewegungshemmung, insbesondere durch Beaufschlagung mit einer Vorspannkraft oder einem Vorspanndruck oder einem Strömungsbegrenzungsventil, beaufschlagt.

5. Ballenpresse nach einem der vorhergehenden Ansprüche, wobei der das Entladen des Ballens unterstützende Riemenspanner (7) in einer Richtung (7c) bewegbar ist, die auf eine von der Entladetür (9) freigegebene Entladeöffnung zu geht oder zumindest eine auf die genannte Entladeöffnung zu gehende Hauptkomponente aufweist.

6. Ballenpresse nach einem der vorhergehenden Ansprüche, wobei der das Entladen des Ballens unterstützende Riemenspanner (7) auf einer der Entladetür (9) gegenüberliegenden Seite der Ballenformkammer (2) angeordnet ist.

7. Ballenpresse nach einem der vorhergehenden Ansprüche, wobei der das Entladen des Ballens unterstützende Riemenspanner (7) in Nachbarschaft zu Starterwalzen (5, 6) angeordnet ist, welche Starterwalzen (5, 6) in einem Eingangsbereich oder Einlaufbereich der Ballenformkammer (2) angeordnet sind.

8. Ballenpresse nach einem der vorhergehenden Ansprüche, wobei der das Entladen des Ballens unterstützende Riemenspanner (7) quer zur Umlaufbahn des Riemenelements (3) in das Zentrum der Ballenformkammer (2) verfahrbar ist.

9. Ballenpresse nach einem der vorhergehenden Ansprüche, wobei zumindest ein weiterer Riemenspanner (8) vorgesehen ist und die Entladesteuervorrichtung (12) dazu ausgebildet ist, den weiteren Riemenspanner (8) beim Entladen eines Ballens derart nachzusteuern, dass eine vorbestimmte Riemenspannung aufrecht erhalten wird.

## Claims

1. Baler comprising a partially or fully variable bale chamber (2), in which stemlike and/or leaf-like crops or similar material to be compressed can be shaped and/or compressed to form bales, wherein the bale-forming chamber (2) comprises at least one belt element (3) which circulates around deflection rollers (4) and to which at least one adjustable belt tensioner (7, 8) is assigned, wherein the bale-forming chamber (2) comprises an openable unloading door (9), and wherein an unloading-control device (12) is provided for controlling the unloading door (9) and/or the deflection rollers (4) and/or the belt tensioners (7, 8) when unloading a bale, **characterised in that** the unloading-control device (12) is designed, during unloading, to press the belt tensioner (7) against the bale while opening the unloading door (9) and to provide an opening movement of the unloading door (9), the movement profile and/or speed profile of which is adapted to the travel of the belt tensioner (7), and to push the bale out of the bale-forming chamber (2) by means of the belt tensioner (7) while the belt element (3) remains tensioned.

2. Baler according to the preceding claim, wherein the unloading-control device (12) is designed to keep the unloading door (9) in contact with the bales and/or to press the unloading door against the bale when unloading a bale.

3. Baler according to the preceding claim, wherein the unloading-control device (12) is designed such that, when unloading a bale, the unloading door (9) is pushed open by the bale and the unloading door (9) acts against the bale with a force that counteracts said bale pushing the door open.

4. Baler according to the preceding claim, wherein the unloading-control device (12) switches a control actuator (17) that is assigned to the unloading door (9) during unloading in a floating position and/or applies predetermined movement inhibition to said actuator, in particular by applying a pre-tensioning force or pre-tensioning pressure or by acting on a flow-limiting valve.

5. Baler according to any of the preceding claims, wherein the belt tensioner (7) that assists the unloading of the bale can be moved in a direction (7c) which goes towards an unloading opening uncovered by the unloading door (9) or has at least one main component that goes towards said unloading opening.

6. Baler according to any of the preceding claims, wherein the belt tensioner (7) that assists the unloading of the bale is arranged on a side of the bale-forming chamber (2) that is opposite the unloading door (9).

7. Baler according to any of the preceding claims, wherein the belt tensioner (7) that assists the unloading of the bale is arranged so as to be adjacent to starter rollers (5, 6), which starter rollers (5, 6) are arranged in an intake region or inlet region of the bale-forming chamber (2).

8. Baler according to any of the preceding claims, wherein the belt tensioner (7) that assists the unloading of the bale can be moved into the centre of the bale-forming chamber (2) transversely to the circulating path of the belt element (3).

9. Baler according to any of the preceding claims, wherein at least one additional belt tensioner (8) is provided and the unloading-control device (12) is designed to readjust the additional belt tensioner (8) when unloading a bale such that predetermined belt tensioning is maintained.

## Revendications

1. Presse à balles avec une chambre à balles (2) en partie variable ou totalement variable, dans laquelle des produits de récolte de type paille et/ou feuille ou des produits à presser similaires peuvent être façonnés et/ou pressés en balles, dans laquelle la chambre de façonnage de balles (2) présente au moins un élément de courroie (3) circulant autour de poulies de renvoi (4), auquel au moins un tendeur de courroie (7, 8) pouvant être ajusté est associé, dans laquelle la chambre de façonnage de balles (2) présente une porte de déchargement (9) pouvant être montée, et dans laquelle un dispositif de commande de déchargement (12) est prévu pour commander la porte de déchargement (9) et/ou les poulies de renvoi (4) et/ou le tendeur de courroie (7, 8) lors du déchargement d'une balle, **caractérisée en ce que** le dispositif de commande de déchargement (12) est réalisé pour pousser lors du déchargement le tendeur de courroie (12) contre la balle moyennant ouverture de la porte de déchargement (9) et pour prévoir un déplacement de montée de la porte de déchargement (9), dont le profil de déplacement et/ou le profil de vitesse sont adaptés au mouvement de réglage du tendeur de courroie (7), et ainsi pour pousser la balle par le tendeur de courroie (7) hors de la chambre de façonnage de balles (2) alors que l'élément de courroie (3) reste tendu.

2. Presse à balles selon la revendication précédente, dans laquelle le dispositif de déchargement (12) est réalisé pour maintenir, lors du déchargement d'une balle, la porte de déchargement (9) en contact avec la balle et/ou pour la pousser contre la balle.

3. Presse à balles selon la revendication précédente, dans laquelle le dispositif de commande de déchargement (12) est réalisé de telle manière que la porte de déchargement (9) est ouverte en poussant lors du déchargement d'une balle par pression par la balle et la porte de déchargement (9) agit contre la balle avec une force contrecarrant l'ouverture en poussant.

4. Presse à balles selon la revendication précédente, dans laquelle le dispositif de commande de déchargement (12) commute dans une position flottante lors du déchargement un actionneur de réglage (17) associé à la porte de déchargement (9) et/ou le soumet à l'action d'un blocage de mouvement prédéfini, en particulier d'une contrainte exercée par une force de précontrainte ou par une pression de précontrainte ou par une soupape de limitation d'écoulement.

5. Presse à balles selon l'une quelconque des revendications précédentes, dans laquelle le tendeur de courroie (7) soutenant le déchargement de la balle peut être déplacé dans une direction (7c), qui va en direction d'une ouverture de déchargement dégagée par la porte de déchargement (9) ou présente au moins une composante principale allant en direction de ladite ouverture de déchargement.

6. Presse à balles selon l'une quelconque des revendications précédentes, dans laquelle le tendeur de courroie (7) soutenant le déchargement de la balle est disposé sur un côté, faisant face à la porte de déchargement (9), de la chambre de façonnage de balles (2).

7. Presse à balles selon l'une quelconque des revendications précédentes, dans laquelle le tendeur de courroie (7) soutenant le déchargement de la balle est disposé à proximité de cylindres de démarrage (5, 6), lesquels cylindres de démarrage (5, 6) sont disposés dans une zone d'entrée ou une zone d'admission de la chambre de façonnage de balles (2).

8. Presse à balles selon l'une quelconque des revendications précédentes, dans laquelle le tendeur de courroie (7) soutenant le déchargement de la balle peut être déplacé dans le centre de la chambre de façonnage de balles (2) de manière transversale par rapport à la trajectoire circulaire de l'élément de courroie (3).

9. Presse à balles selon l'une quelconque des revendications précédentes, dans laquelle au moins un autre tendeur de courroie (8) est prévu et le dispositif de commande de déchargement (12) est réalisé pour commander ultérieurement l'autre tendeur de courroie (8) lors du déchargement d'une balle de telle manière qu'une tension de courroie prédéfinie est maintenue.
